# EUROPEAN PATENT SPECIFICATION

(11) **EP 3 298 615 B1**
(45) Date of publication and mention of the grant of the patent: **25.12.2019**
(21) Application number: 16723588.6
(22) Date of filing: 29.04.2016
(51) Int. Cl.: H01F 38/14

(54) **INTEGRATION OF SOLENOID POSITIONING ANTENNAS IN WIRELESS INDUCTIVE CHARGING POWER APPLICATIONS**
INTEGRATION VON SOLENOIDPOSITIONIERUNGSANTENNEN IN STROMANWENDUNGEN ZUM DRAHTLOSEN INDUKTIVEN LADEN
INTÉGRATION D'ANTENNES DE POSITIONNEMENT DE SOLÉNOÏDE DANS DES APPLICATIONS D'ÉNERGIE DE CHARGE INDUCTIVE SANS FIL

(30) Priority: 18.05.2015 US 201562163096 P; 21.01.2016 US 201615003521
(43) Date of publication of application: 28.03.2018
(73) Proprietor: WiTricity Corporation, Watertown, MA 02472 (US)
(72) Inventor: WIDMER, Hans Peter, San Diego, California 92121-1714 (US); ISLINGER, Simon Peter, San Diego, California 92121-1714 (US); BITTNER, Markus, San Diego, California 92121-1714 (US); NIEDERHAUSER, Steven Daniel, San Diego, California 92121-1714 (US)
(74) Representative: Tomkins & Co
(86) International application number: PCT/US2016/030015
(87) International publication number: WO 2016/186814

(56) References cited:
- WO-A1-2010/090539
- US-A1- 2011 193 416
- US-A1- 2012 262 002
- US-A1- 2013 241 300
- US-A1- 2014 125 140

## Description

### FIELD

This application is generally related to wireless charging power transfer applications, and more specifically to integration of solenoid positioning antennas in wireless inductive charging power applications.

### BACKGROUND

Efficiency in wireless inductive charging power applications depends, at least in part, on achieving at least a minimum alignment threshold between a wireless power transmitter and a wireless power receiver. One method for aiding such alignment is the use of magnetic vectoring, where a distance and/or direction between the wireless power transmitter and the wireless power receiver is determined based on sensing one or more attributes of a magnetic field generated by either the wireless power transmitter or the wireless power receiver. However, sensitivity of such a magnetic vectoring method may depend, at least in part, upon the positioning sensors, coils or antennas being disposed in close proximity to the ferrite of the wireless power transmitter. Accordingly, integration of solenoid positioning antennas in wireless inductive charging power applications as described herein are desirable.

### SUMMARY

According to some implementations, an apparatus for determining a position between a wireless power transmitter and a wireless power receiver is provided. The apparatus comprises a ferrite structure. The apparatus comprises a plurality of detection loops formed from metallic traces on a flexible printed circuit wrapped on or around the ferrite structure as claimed in claim 1.

In some other implementations, a method for determining relative positions between a wireless charging power transmitter and a wireless charging power receiver is provided. The method comprises for each of a plurality of detection loops formed from metallic traces on a flexible printed circuit wrapped on or around a ferrite structure, sensing an amount of magnetic flux flowing in a direction normal to a winding plane of the detection loop as claimed in claim 9. The method comprises determining the position between the wireless power transmitter and the wireless power receiver based at least in part on the amount of magnetic flux sensed by each of the plurality of detection loops.

In yet other implementations, a method for fabricating an apparatus for determining a position between a wireless power transmitter and a wireless power receiver is provided as claimed in claim 12. The method comprises providing a ferrite structure. The method comprises forming a plurality of metallic traces on a flexible printed circuit configurable to be wrapped on or around the ferrite structure to form a plurality of detection loops. The method comprises wrapping the flexible printed circuit on or around the ferrite structure.

In yet other implementations, an apparatus for determining a position between a wireless power transmitter and a wireless power receiver is provided. The apparatus comprises a plurality of means for sensing, each means for sensing configured to sense an amount of magnetic flux flowing in a direction normal to a winding plane of the means for sensing and formed from a plurality of metallic traces on a flexible printed circuit that is configurable to be wrapped on or around a ferrite structure. The apparatus comprises means for determining the position between the wireless power transmitter and the wireless power receiver based at least in part on the amount of magnetic flux sensed by each of the plurality of means for sensing. US 2013/241300 discloses detecting apparatus, power receiving apparatus, power transmitting apparatus, and contactless power supply system. US 2014/125140 discloses coil arrangements in wireless power transfer systems for low electromagnetic emissions. US 2011/193416 discloses tunable wireless energy transfer systems. WO 2010/090539 discloses method and apparatus for pulsed power generation. US 2012/0262002 discloses antenna alignment and vehicle guidance for wireless charging of electric vehicles.

### BRIEF DESCRIPTION OF THE DRAWINGS

FIG. 1 is a functional block diagram of a wireless power transfer system, in accordance with some implementations.
FIG. 2 is a functional block diagram of a wireless power transfer system, in accordance with some other implementations.
FIG. 3 is a schematic diagram of a portion of transmit circuitry or receive circuitry of FIG. 2 including a transmit or receive coupler, in accordance with some implementations.
FIG. 4 is an exploded isometric illustration of a double D wireless power transfer system similar to that discussed in connection with any of FIGs. 1-3, in accordance with some implementations.
FIG. 5 is an illustration of a plurality of magnetic vectoring detection loops utilized in the wireless power transfer system of FIG. 4, in accordance with some implementations.
FIG. 6 is an isometric illustration of a portion of the magnetic vectoring detection loops and wireless power transfer system of FIG. 4, in accordance with some implementations.
FIG. 7 is an isometric illustration of a flipped portion of the magnetic vectoring detection loops and wireless power transfer system of FIG. 4, in accordance with some implementations.
FIG. 8 is a collapsed isometric illustration of a portion of the magnetic vectoring detection loops and wireless power transfer system of FIG. 4, in accordance with some implementations.
FIG. 9 is a cutaway illustration of a portion of the magnetic vectoring detection loops and wireless power transfer system of FIG. 4, in accordance with some implementations.
FIG. 10 is an exploded isometric illustration of another wireless power transfer system similar to that discussed in connection with any of FIGs. 1-3 utilizing a plurality of ferrite tiles, in accordance with some implementations.
FIG. 11 is an exploded isometric illustration of a portion of the wireless power transfer system of FIG. 10, in accordance with some implementations.
FIG. 12 is an isometric illustration of a portion of the wireless power transfer system of FIG. 10 including a plurality of magnetic vectoring detection loops, in accordance with some implementations.
FIG. 13 is an exploded isometric illustration of a portion of the wireless power transfer system of FIG. 10, in accordance with some implementations.
FIG. 14 is an isometric illustration of a portion of the wireless power transfer system of FIG. 10, in accordance with some implementations.
FIG. 15 is an isometric illustration of a flipped portion of the wireless power transfer system of FIG. 10, in accordance with some implementations.
FIG. 16 is a flowchart depicting a method for determining a position between a wireless power transmitter and a wireless power receiver, in accordance with some implementations.
FIG. 17 is a flowchart depicting a method for fabricating an apparatus for determining a position between a wireless power transmitter and a wireless power receiver, in accordance with some implementations.

### DETAILED DESCRIPTION

In the following detailed description, reference is made to the accompanying drawings, which form a part of the present disclosure. The illustrative implementations described in the detailed description, drawings, and claims are not meant to be limiting. Other implementations may be utilized, and other changes may be made, without departing from the spirit or scope of the subject matter presented here. It will be readily understood that the aspects of the present disclosure, as generally described herein, and illustrated in the Figures, can be arranged, substituted, combined, and designed in a wide variety of different configurations, all of which are explicitly contemplated and form part of this disclosure.

Wireless power transfer may refer to transferring any form of energy associated with electric fields, magnetic fields, electromagnetic fields, or otherwise from a transmitter to a receiver without the use of physical electrical conductors (e.g., power may be transferred through free space). The power output into a wireless field (e.g., a magnetic field or an electromagnetic field) may be received, captured, or coupled by a "receive coupler" to achieve power transfer.

The terminology used herein is for the purpose of describing particular implementations only and is not intended to be limiting on the disclosure. It will be understood that if a specific number of a claim element is intended, such intent will be explicitly recited in the claim, and in the absence of such recitation, no such intent is present. For example, as used herein, the singular forms "a," "an" and "the" are intended to include the plural forms as well, unless the context clearly indicates otherwise. As used herein, the term "and/or" includes any and all combinations of one or more of the associated listed items. It will be further understood that the terms "comprises," "comprising," "includes," and "including," when used in this specification, specify the presence of stated features, integers, steps, operations, elements, and/or components, but do not preclude the presence or addition of one or more other features, integers, steps, operations, elements, components, and/or groups thereof. Expressions such as "at least one of," when preceding a list of elements, modify the entire list of elements and do not modify the individual elements of the list.

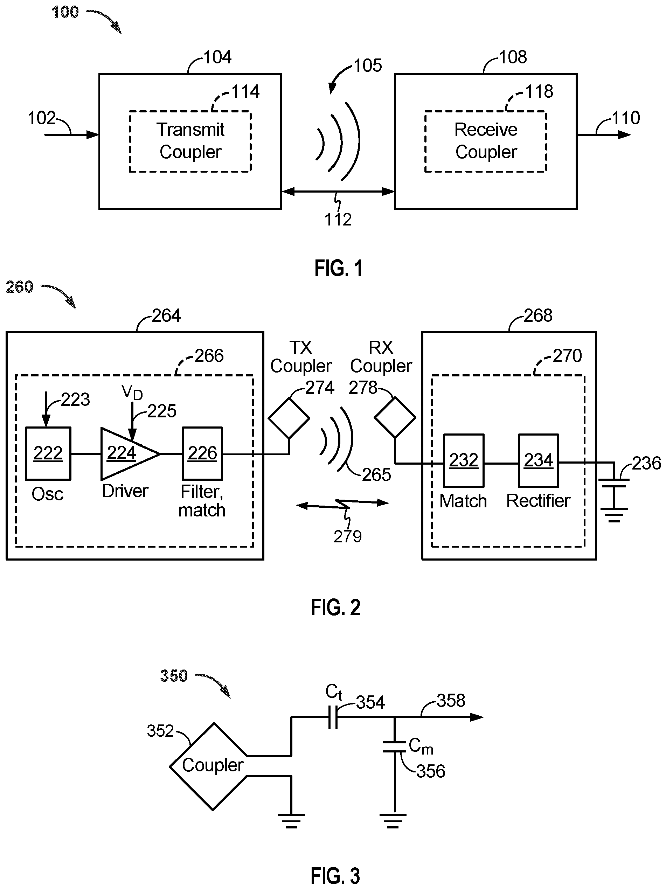

FIG. 1 is a functional block diagram of a wireless power transfer system 100, in accordance with some implementations. Input power 102 may be provided to a transmitter 104 from a power source (not shown) to generate a wireless (e.g., magnetic or electromagnetic) field 105 via a transmit coupler 114 for performing energy transfer. The receiver 108 may receive power when the receiver 108 is located in the wireless field 105 produced by the transmitter 104. The wireless field 105 corresponds to a region where energy output by the transmitter 104 may be captured by the receiver 108. A receiver 108 may couple to the wireless field 105 and generate output power 110 for storing or consumption by a device (not shown in this figure) coupled to the output power 110. Both the transmitter 104 and the receiver 108 are separated by a distance 112.

In one example implementation, power is transferred inductively via a time-varying magnetic field generated by the transmit coupler 114. The transmitter 104 and the receiver 108 may further be configured according to a mutual resonant relationship. When the resonant frequency of the receiver 108 and the resonant frequency of the transmitter 104 are substantially the same or very close, transmission losses between the transmitter 104 and the receiver 108 are minimal. However, even when resonance between the transmitter 104 and receiver 108 are not matched, energy may be transferred, although the efficiency may be reduced. For example, the efficiency may be less when resonance is not matched. Transfer of energy occurs by coupling energy from the wireless field 105 of the transmit coupler 114 to the receive coupler 118, residing in the vicinity of the wireless field 105, rather than propagating the energy from the transmit coupler 114 into free space. Resonant inductive coupling techniques may thus allow for improved efficiency and power transfer over various distances and with a variety of inductive coupler configurations.

In some implementations, the wireless field 105 corresponds to the "near-field" of the transmitter 104. The near-field may correspond to a region in which there are strong reactive fields resulting from the currents and charges in the transmit coupler 114 that minimally radiate power away from the transmit coupler 114. The near-field may correspond to a region that is within about one wavelength (or a fraction thereof) of the transmit coupler 114. Efficient energy transfer may occur by coupling a large portion of the energy in the wireless field 105 to the receive coupler 118 rather than propagating most of the energy in an electromagnetic wave to the far field. When positioned within the wireless field 105, a "coupling mode" may be developed between the transmit coupler 114 and the receive coupler 118.

FIG. 2 is a functional block diagram of a wireless power transfer system 200, in accordance with some other implementations. The system 200 may be a wireless power transfer system of similar operation and functionality as the system 100 of FIG. 1. However, the system 200 provides additional details regarding the components of the wireless power transfer system 200 as compared to FIG. 1. The system 200 includes a transmitter 204 and a receiver 208. The transmitter 204 includes transmit circuitry 206 that includes an oscillator 222, a driver circuit 224, and a filter and matching circuit 226. The oscillator 222 may be configured to generate a signal at a desired frequency that may be adjusted in response to a frequency control signal 223. The oscillator 222 provides the oscillator signal to the driver circuit 224. The driver circuit 224 may be configured to drive the transmit coupler 214 at a resonant frequency of the transmit coupler 214 based on an input voltage signal (V_{D}) 225.

The filter and matching circuit 226 filters out harmonics or other unwanted frequencies and matches the impedance of the transmit circuitry 206 to the transmit coupler 214. As a result of driving the transmit coupler 214, the transmit coupler 214 generates a wireless field 205 to wirelessly output power at a level sufficient for charging a battery 236.

The receiver 208 comprises receive circuitry 210 that includes a matching circuit 232 and a rectifier circuit 234. The matching circuit 232 may match the impedance of the receive circuitry 210 to the impedance of the receive coupler 218. The rectifier circuit 234 may generate a direct current (DC) power output from an alternate current (AC) power input to charge the battery 236. The receiver 208 and the transmitter 204 may additionally communicate on a separate communication channel 219 (e.g., Bluetooth, Zigbee, cellular, etc.). The receiver 208 and the transmitter 204 may alternatively communicate via in-band signaling using characteristics of the wireless field 205. In some implementations, the receiver 208 may be configured to determine whether an amount of power transmitted by the transmitter 204 and received by the receiver 208 is appropriate for charging the battery 236.

FIG. 3 is a schematic diagram of a portion of the transmit circuitry 206 or the receive circuitry 210 of FIG. 2, in accordance with some implementations. As illustrated in FIG. 3, transmit or receive circuitry 350 may include a coupler 352. The coupler 352 may also be referred to or be configured as a "conductor loop", a coil, an inductor, or a "magnetic" coupler. The term "coupler" generally refers to a component that may wirelessly output or receive energy for coupling to another "coupler."

The resonant frequency of the loop or magnetic couplers is based on the inductance and capacitance of the loop or magnetic coupler. Inductance may be simply the inductance created by the coupler 352, whereas, capacitance may be added via a capacitor (or the self-capacitance of the coupler 352) to create a resonant structure at a desired resonant frequency, or at a fixed frequency set or prescribed by a particular operations standard. As a non-limiting example, a capacitor 354 and a capacitor 356 may be added to the transmit or receive circuitry 350 to create a resonant circuit that selects a signal 358 at a resonant frequency. For larger sized couplers using large diameter couplers exhibiting larger inductance, the value of capacitance needed to produce resonance may be lower. Furthermore, as the size of the coupler increases, coupling efficiency may increase. This is mainly true if the size of both transmit and receive couplers increase. For transmit couplers, the signal 358, oscillating at a frequency that substantially corresponds to the resonant frequency of the coupler 352, may be an input to the coupler 352.

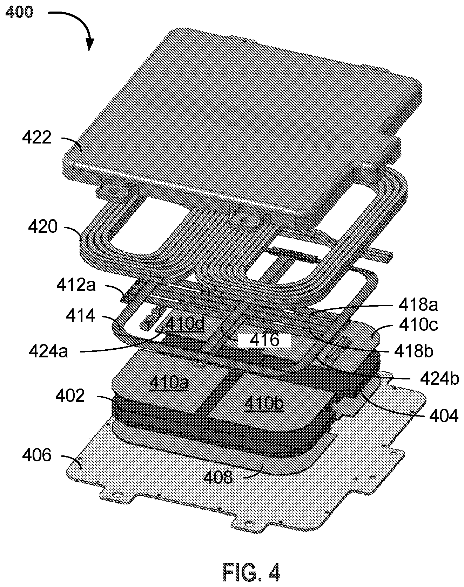

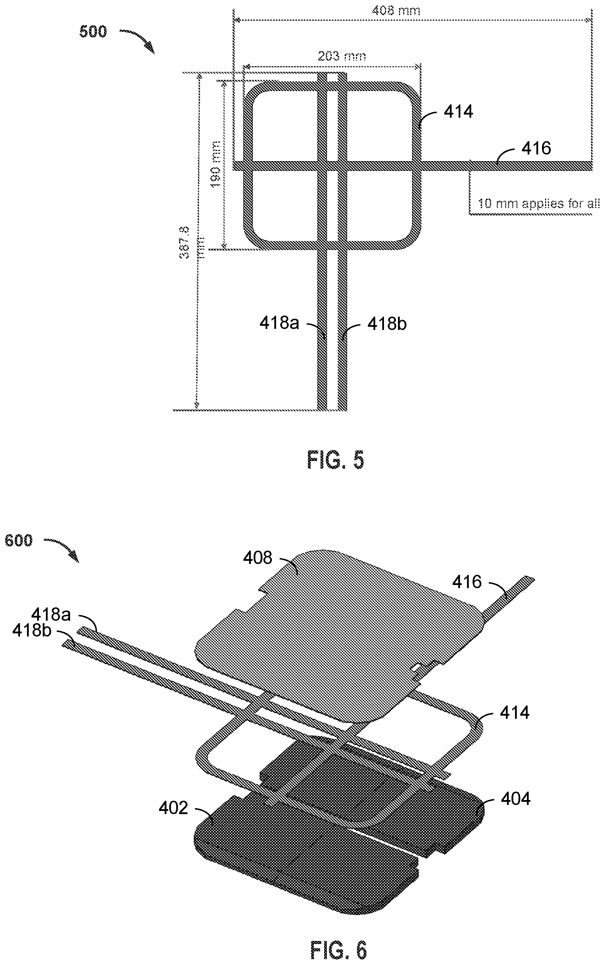

FIG. 4 is an exploded isometric illustration 400 of a double D wireless power transfer system similar to that discussed in connection with any of FIGs. 1-3, in accordance with some implementations. FIG. 4 shows a cover 422 disposed over a double D coil 420, which may comprise a first wireless power transfer coil and a second wireless power transfer coil. In some implementations, the first wireless power transfer coil may also be known as, or comprise at least a portion of "first means for wirelessly transferring power." In some implementations, the second wireless power transfer coil may also be known as, or comprise at least a portion of "second means for wirelessly transferring power." Under the double D coil 420 is shown a plurality of magnetic vectoring detection loops 414, 416, 418a, 418b. FIG. 4 also shows a plurality of insulation layers 410a, 410b, 410c, 410d, which in some implementations may be made of Mylar. Under the insulation layers 410a-410d is shown a first ferrite block 402 and a second ferrite block 404 disposed adjacent to the first ferrite block 402. In some implementations, at least one edge of the first ferrite block 402 and of the second ferrite block 404 may be chamfered in order to provide clearance for portions of the double D coil 420 that transition from one layer of windings to an adjacent layer of windings. A first radius fixture 424a and a second radius fixture 424b are shown, providing a minimum bend radius for the plurality of detection loops 414, 416, 418a, 418b. An insulation layer 408 is shown between each of the first ferrite block 402 and the second ferrite block 404 and a back plate 406. Many of the above-mentioned portions of the wireless power transfer system as well as an order or method of assembly or construction will be described in more detail below in connection with FIGs. 5-9.

FIG. 5 is an illustration 500 of a plurality of magnetic vectoring detection loops 414, 416, 418a, 418b utilized in the wireless power transfer system of FIG. 4, in accordance with some implementations. Each of the detection loops 414, 416, 418a, 418b may be a solenoid detection loop (e.g., comprising solenoid coils) formed from metallic and/or electrically conductive traces fabricated on flexible printed circuits (FPCs) or ribbon cable. In some implementations, each of the detection loops 414, 416, 418a, 418b may be formed from the metallic and/or electrically conductive traces fabricated on a single, unitary flexible printed circuit or ribbon cable. Each of the detection loops 414, 416, 418a, 418b will be wrapped on or around a respective portion and about a respective axis of one or both of the first ferrite block 402 and the second ferrite block 404 shown in FIG. 4, as further described in connection with FIG. 6. In some implementations, each of the detection loops 414, 416, 418a, 418b have a width of 10mm, though any other width is also contemplated. A detection loop 418a and a detection loop 418b each have a length of 387.8mm, though any other length is also contemplated. A detection loop 416 has a length of 408mm, though any other length is also contemplated. A detection loop 414 may be formed substantially into a rectangular cross section having rounded edges (e.g., edges that are rounded in the plane of the detection loops 414, 416, 418a, 418b when laid flat). This rectangular cross section may have an outside dimension of 83mm x 70mm, though any other outside dimensions are also contemplated.

FIG. 6 is an isometric illustration 600 of a portion of the magnetic vectoring detection loops 414, 416, 418a, 418b and wireless power transfer system of FIG. 4, in accordance with some implementations. FIG. 6 shows the first ferrite block 402 and the second ferrite block 404. In some implementations, the detection loops 414, 416, 418a, 418b, comprising flexible printed circuits (FPCs) or ribbon cable, may be laid on the first ferrite block 402 and the second ferrite block 404.

In some implementations, the detection loop 418a may be laid on a top surface (with respect to the orientation shown in FIG. 6) of the first ferrite block 402 at an edge that is adjacent to the second ferrite block 404. However, the detection loop 418a may be laid anywhere on the top surface of the first ferrite block 402 in an orientation parallel to that shown in FIG. 6.

In some implementations, the detection loop 418b may be laid on a top surface (with respect to the orientation shown in FIG. 6) of the second ferrite block 404 at an edge that is adjacent to the first ferrite block 402. However, the detection loop 418b may be laid anywhere on the top surface of the second ferrite block 404 in an orientation parallel to that shown in FIG. 6. The reason for the presence of both the detection loop 418a and the detection loop 418b having the same orientation is that since the first ferrite block 402 is not in physical contact with the second ferrite block 404, both detection loops 418a, 418b are desired in order to enclose magnetic flux passing through the first ferrite block 402 and the second ferrite block 404, respectively, without that flux having to pass through the gap between the first ferrite block 402 and the second ferrite block 404.

In some implementations, the detection loop 416 may be laid on the top surface (with respect to the orientation shown in FIG. 6) of both the first ferrite block 402 and the second ferrite block 404 in an orientation that is substantially perpendicular to the orientation of the first and detection loops 418a, 418b.

In some implementations, the detection loop 414 may be laid on the top surface (with respect to the orientation shown in FIG. 6) of both the first ferrite block 402 and the second ferrite block 404 such that the detection loop 414 is disposed along or adjacent to the outer edges of each of the first ferrite block 402 and the second ferrite block 404.

Once the plurality of detection loops 414, 416, 418a, 418b are laid on the first ferrite block 402 and/or the second ferrite block 404, the insulation layer 408 may be laid over (with respect to the orientation shown in FIG. 6) the plurality of detection loops 414, 416, 418a, 418b and the first ferrite block 402 and the second ferrite block 404. In some implementations, the insulation layer 408 may have an adhesive on one or both sides for anchoring or holding contacting surfaces together.

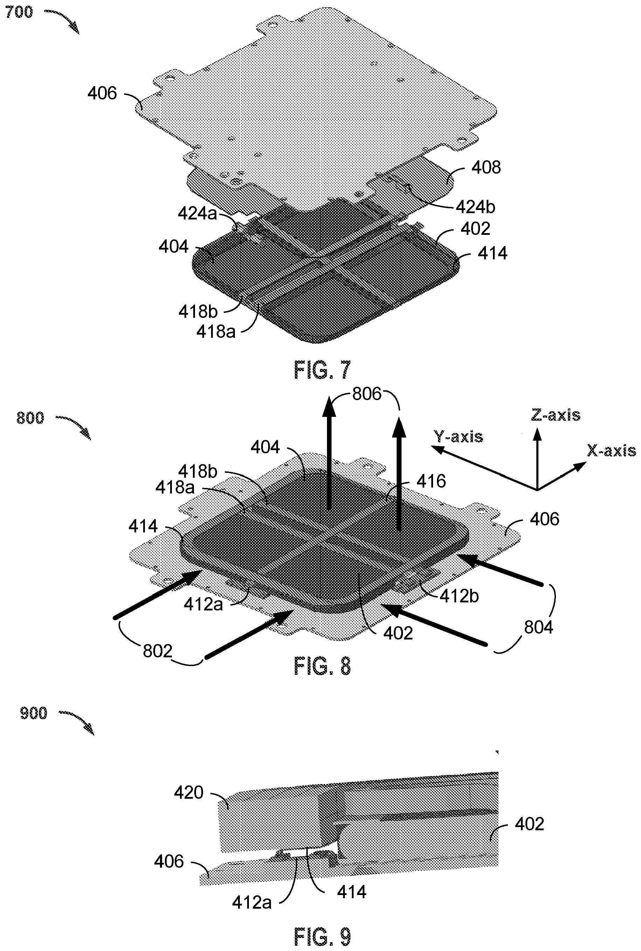

FIG. 7 is an isometric illustration 700 of a flipped portion of the magnetic vectoring detection loops 414, 416, 418a, 418b and wireless power transfer system of FIG. 4, in accordance with some implementations. FIG. 7 is flipped over as compared to FIG. 6 for easy visualization. In FIG. 7, the first and second radius fixtures 424a, 424b may be mounted to or against side edges of the first ferrite block 402 and the second ferrite block 404 in order to control a minimum bend radius of each of the plurality of detection loops 414, 416, 418a, 418b along the edges of the first ferrite block 402 and the second ferrite block 404 as they are wrapped on or around the first ferrite block 402 and/or the second ferrite block 404 and the first and second radius fixtures 424a, 424b to form closed loops. The back plate 406 may be attached to the first ferrite block 402 and the second ferrite block 404 utilizing the insulation layer 408, which may have an adhesive on one or both sides.

FIG. 8 is a collapsed isometric illustration 800 of a portion of the magnetic vectoring detection loops 414, 416, 418a, 418b and wireless power transfer system of FIG. 4, in accordance with some implementations. FIG. 8 shows the back plate 406, the first ferrite block 402, the second ferrite block 404, and the plurality of detection loops 414, 416, 418a, 418b. Each detection loop of the plurality of detection loops 414, 416, 418a, 418b is configured to sense an amount of magnetic flux 802, 804, 806 flowing in a direction normal to a winding plane of the detection loop. For example, the winding plane of detection loop 414 may be in the X-Y plane, the winding plane of detection loop 416 may be in the X-Z plane, and the winding plane of detection loops 418a, 418b may be in the X-Z plane. As shown, one of the plurality of detection loops 414 is disposed along a perimeter of a top surface of the ferrite structure (e.g., the first ferrite block 402 and the second ferrite block 404). In some implementations, one of the plurality of detection loops 414 is disposed along side edges of the ferrite structure, e.g., not on the top of the ferrite structure. In some implementations, the detection loops 414, 416, 418a, 418b may also be known as, or comprise at least a portion of "a plurality of means for sensing", where each means for sensing is configured to sense an amount of magnetic flux flowing in a direction normal to a winding plane of the means for sensing and is formed from a plurality of metallic traces on a flexible printed circuit that is configurable to be wrapped on or around a ferrite structure. FIG. 8 also shows a first PCB 412a and a second PCB 412b, which may include one or more components or processors configured to connect to, receive signals from, and/or transmit signals to corresponding ones of the plurality of detection loops 414, 416, 418a, 418b. Thus, the first and second PCBs 412a and 412b may be connected to the corresponding ones of the plurality of detection loops 414, 416, 418a, 418b. In some implementations, the components and/or processors within the first and second PCBs 412a, 412b may be integrated into a single PCB or, alternatively, into three or more PCBs, depending on the particular implementation. Moreover, in some implementations, one or both of the PCBs 412a, 412b may comprise a processor configured to determine the position between the wireless power transmitter and the wireless power receiver based at least in part on the amount of magnetic flux sensed by each of the plurality of detection loops. In some implementations, the PCBs 412a, 412b may also be known as, or comprise at least a portion of "means for determining the position between the wireless power transmitter and the wireless power receiver" based at least in part on the amount of magnetic flux sensed by each of the plurality of means for sensing.

FIG. 9 is a cutaway illustration 900 of a portion of the magnetic vectoring detection loops 414, 416, 418a, 418b and wireless power transfer system of FIG. 4, in accordance with some implementations. FIG. 9 shows a cutaway view of the double D coil 420 of FIG. 4 as it would be mounted in proximity to the first ferrite block 402. Of course, the ferrite block shown could also be the second ferrite block 404. FIG. 9 shows the back plate 406 upon which the first PCB 412a (and/or the second PCB 412b) may be mounted. FIG. 9 additionally shows the routing path of at least a portion of the detection loop 414 (and/or any of the first through detection loops 416, 418a, 418b). The use of solenoids comprising the flexible printed circuits (FPCs) or ribbon cable for the detection loops 414, 416, 418a, 418b allows for much closer mounting between the double D coil 420, the first ferrite block 402 and/or the second ferrite block 404, the first and/or second PCBs 412a, 412b, and any of the plurality of detection loops 414, 416, 418a, 418b. Accordingly, in some implementations, a first wireless power transfer coil is wrapped on or around the first ferrite block 402 and a second wireless power transfer coil is wrapped on or around the second ferrite block 404 (e.g., the coils of the double D coil 420).

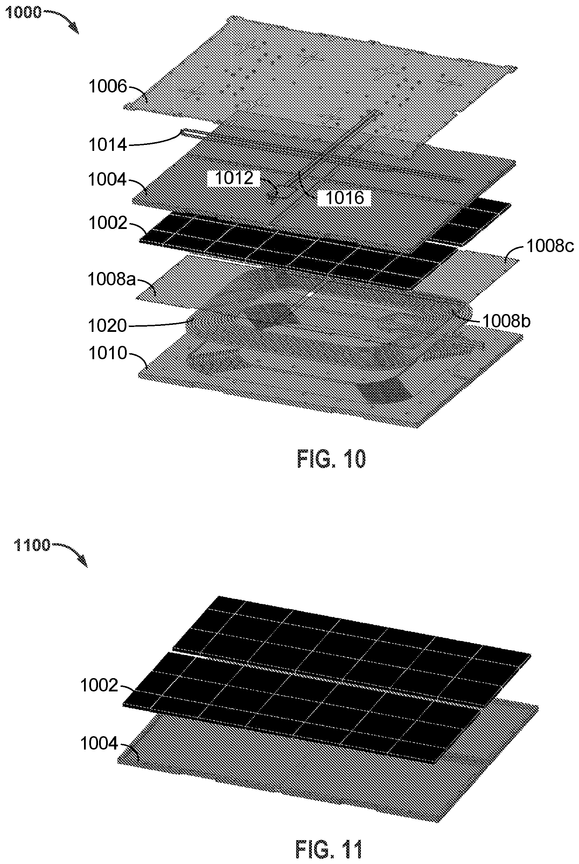

FIG. 10 is an exploded isometric illustration 1000 of another wireless power transfer system similar to that discussed in connection with any of FIGs. 1-3 utilizing a plurality of ferrite tiles 1002, in accordance with some implementations. FIG. 10 shows a back plate 1006, a plurality of magnetic vectoring detector loops 1014, 1016, which may be connected to at least one PCB 1012 comprising electronics for providing a sense signal to or receiving a sense signal from the plurality of detector loops 1014, 1016. FIG. 10 also shows a holder 1004 for the plurality of ferrite tiles 1002. The holder 1004 may additionally comprise a plurality of grooves or guides for the detector loops 1014, 1016. FIG. 10 also shows a plurality of insulation layers 1008a, 1008b, 1008c, 1008d (1008d not visible behind the plurality of tiles 1002 in FIG. 10), which in some implementations may be made of Mylar. FIG. 10 also shows a wireless power transmit or receive coil 1020 and a coil holder 1010, which may include a plurality of grooves or guides for the conductor and windings of the coil 1020. Thus, in some implementations, a ferrite structure comprises a plurality of ferrite tiles 1002 disposed in a holder 1004.

FIG. 11 is an exploded isometric illustration 1100 of a portion of the wireless power transfer system of FIG. 10, in accordance with some implementations. FIG. 11 shows the plurality of ferrite tiles 1002, which may be placed into the holder 1004 during manufacture, construction or fabrication of the wireless power transfer system.

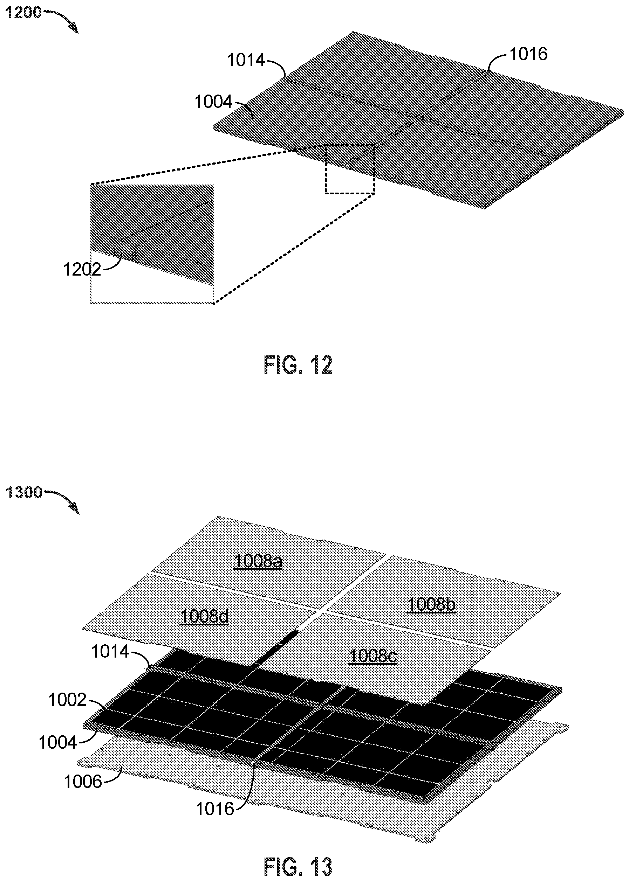

FIG. 12 is an isometric illustration 1200 of a portion of the wireless power transfer system of FIG. 10 including a plurality of magnetic vectoring detection loops 1014, 1016, in accordance with some implementations. FIG. 12 shows two detection loops 1014, 1016, and the ferrite holder 1004. The plurality of ferrite tiles 1002 may be mounted in the holder 1004, though not visible in FIG. 12. In some implementations, a detection loop may also be present, as previously described for other implementations. Thus, detection loops configured to enclose magnetic flux flowing in different directions may be disposed along mutually perpendicular axes from one another. As shown in FIG. 11, the plurality of detection loops 1014, 1016 may be wrapped on or around the holder 1004, utilizing guides, grooves or slots in the holder 1004. In some implementations, radius formers 1202 may be disposed at the edges of the holder 1004 to control a minimum radius for wrapping the detection loops 1014, 1016 around the holder 1004.

FIG. 13 is an exploded isometric illustration 1300 of a portion of the wireless power transfer system of FIG. 10, in accordance with some implementations. FIG. 13 shows the plurality of insulation layers 1008a-1008d, which may be mounted to the plurality of ferrite tiles 1002. As previously described, the plurality of insulation layers 1008a-1008d may have an adhesive on one or both sides for mounting the plurality of ferrite tiles 1002, mounted in the holder 1004, adjacent to or against the transmit or receive coil 1020 (see FIG. 10).

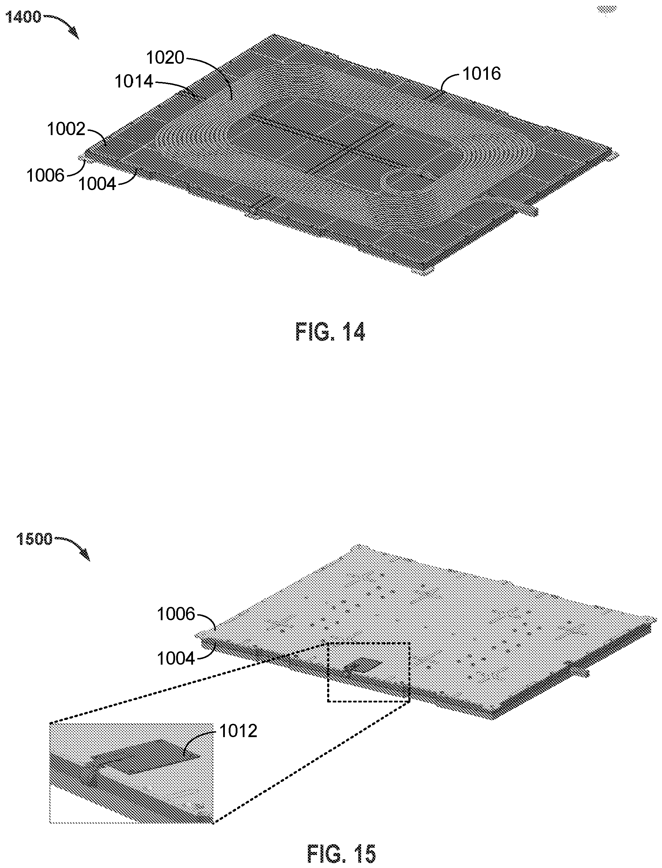

FIG. 14 is an isometric illustration 1400 of a portion of the wireless power transfer system of FIG. 10, in accordance with some implementations. FIG. 14 shows the transmit or receive coil 1020 mounted over the plurality of insulation layers 1008a-1008d (clear in FIG. 14 for easy visualization of other components), the plurality of ferrite tiles 1002 mounted in the holder 1004, and the back plate 1006. As shown, the conductor of the coil 1020 and the detection loop 1014 may both exit within the same groove, slot or guide. Such an arrangement may further reduce the height of the wireless power transfer system. Such an arrangement may additionally provide an intrinsic and physically stable alignment between the coil 1020 and the detection loops 1014, 1016.

FIG. 15 is an isometric illustration 1500 of a flipped portion of the wireless power transfer system of FIG. 10, in accordance with some implementations. FIG. 15 shows a back side of the back plate 1006, upon which the PCB 1012 may be mounted. One or more of the plurality of detector loops 1014, 1016 may be connected to the PCB 1012 such that the PCB 1012 may provide a sense signal to or receive a sense signal from at least one of the plurality of detector loops 1014, 1016.

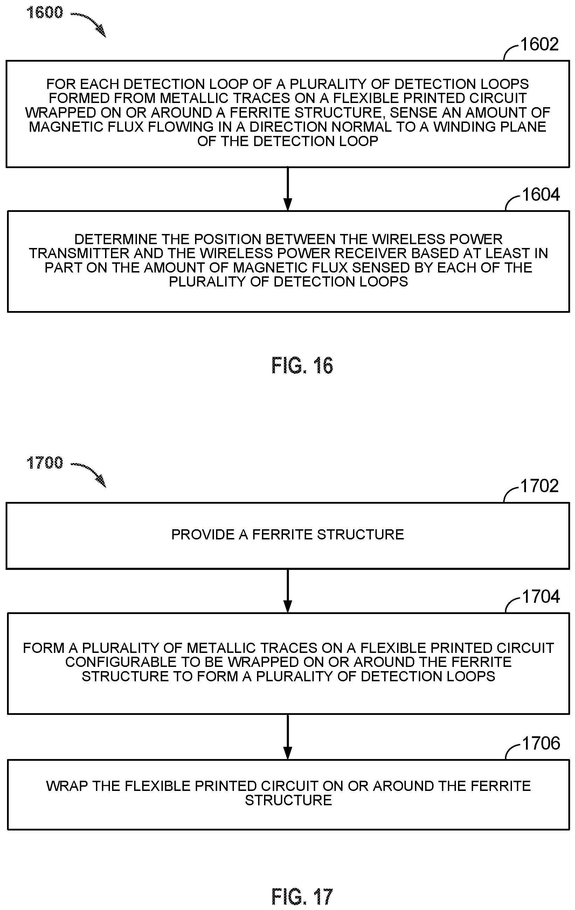

FIG. 16 is a flowchart 1600 depicting a method for determining a position between a wireless power transmitter and a wireless power receiver, in accordance with some implementations. The flowchart 1600 is described herein with reference to at least FIGs. 4-15. Although the flowchart 1600 is described herein with reference to a particular order, in various implementations, blocks herein may be performed in a different order, or omitted, and additional blocks may be added.

Block 1602 includes for each detection loop of a plurality of detection loops formed from metallic traces on a flexible printed circuit wrapped on or around a ferrite structure, sensing an amount of magnetic flux flowing in a direction normal to a winding plane of the detection loop. For example, as previously described in connection with at least FIGs. 4-15, each detection loop of a plurality of detection loops 414, 416, 418a, 418b formed from metallic traces on a flexible printed circuit wrapped on or around a ferrite structure 402, 404 may be configured to sense an amount of magnetic flux flowing in a direction normal to a winding plane of the detection loop (e.g., the X-Y winding plane for the detection loop 414 sensing the Z-component of the magnetic flux 806, the X-Z winding plane for detection loop 416 sensing the Y-component of the magnetic flux 804, and the Y-Z winding plane for the solenoid detection loops 418a, 418b sensing the X-component of the magnetic flux 802). This explanation may equally apply to the solenoid detection loops 1014, 1016 and the plurality of ferrite tiles 1002 within holder 1004 as previously described in connection with FIGs. 10-15.

Block 1604 includes determining the position between the wireless power transmitter and the wireless power receiver based at least in part on the amount of magnetic flux sensed by each of the plurality of detection loops. For example, as previously described in connection with at least FIG. 4-15 a processor or controller (e.g., PCBs 412a, 413b) may determine the position between the wireless power transmitter and the wireless power receiver based at least in part on the amount of magnetic flux 802, 804, 806 sensed by each of the plurality of detection loops 414, 416, 418a, 418b. In some implementations, such a controller may also be known as, or comprise at least a portion of "means for determining the position between the wireless power transmitter and the wireless power receiver based at least in part on the amount of magnetic flux sensed by each of the plurality of means for sensing."

FIG. 17 is a flowchart 1700 depicting a method for fabricating an apparatus for determining a position between a wireless power transmitter and a wireless power receiver, in accordance with some implementations. The flowchart 1700 is described herein with reference to at least FIGs. 4-15. Although the flowchart 1700 is described herein with reference to a particular order, in various implementations, blocks herein may be performed in a different order, or omitted, and additional blocks may be added.

Block 1702 includes providing a ferrite structure. For example, in some implementations, the ferrite structure may comprise the first ferrite block 402 and the second ferrite block 404, as previously described in connection with FIGs. 4-9. In some other implementations, the ferrite structure may comprise the plurality of ferrite tiles 1002 and may additionally include the ferrite tile holder 1004, as previously described in connection with FIGs. 10-15.

Block 1704 includes forming a plurality of metallic traces on a flexible printed circuit configurable to be wrapped on or around the ferrite structure to form a plurality of detection loops. For example, as previously described in connection with at least FIG. 4-15 a plurality of metallic traces may be formed on the flexible printed circuit shown in FIG. 5. The FPC and metallic traces formed thereon may be configured or may be configurable to be wrapped on or around the ferrite structure (e.g., either the first ferrite block 402 and the second ferrite block 404 shown in FIGs. 4-9, or the plurality of ferrite tiles 1002 disposed in the holder 1004 shown in FIGs. 10-15) to form the plurality of solenoid detection loops 414, 416, 418a, 418b with respect to FIGs. 4-9, or 1014, 1016 with respect to FIGs. 10-15. Each of these detection loops may be wound in respective, mutually perpendicular planes from one another (e.g., in two or more of mutually perpendicular or orthogonal X-, Y-, and Z-planes).

Block 1706 includes wrapping the flexible printed circuit on or around the ferrite structure. For example, the FPC may be wrapped on or around the first ferrite block 402 and the second ferrite block 404, as previously described in connection with FIGs. 4-9, or around the plurality of ferrite tiles 1002 in the ferrite holder 1004 as previously described in connection with FIGs. 10-15.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

Information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative logical blocks, modules, circuits, and algorithm steps described in connection with the implementations disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. The described functionality may be implemented in varying ways for each particular application, but such implementation decisions should not be interpreted as causing a departure from the scope of the implementations.

The various illustrative blocks, modules, and circuits described in connection with the implementations disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm and functions described in connection with the implementations disclosed herein may be embodied directly in hardware, in a software module executed by a processor, or in a combination of the two. If implemented in software, the functions may be stored on or transmitted as one or more instructions or code on a tangible, non-transitory, computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art. A storage medium is coupled to the processor such that the processor can read information from, and write information to, the storage medium. In the alternative, the storage medium may be integral to the processor. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer readable media. The processor and the storage medium may reside in an ASIC.

For purposes of summarizing the disclosure, certain aspects, advantages and novel features have been described herein. It is to be understood that not necessarily all such advantages may be achieved in accordance with any particular implementation. Thus, one or more implementations achieves or optimizes one advantage or group of advantages as taught herein without necessarily achieving other advantages as may be taught or suggested herein.

Various modifications of the above described implementations will be readily apparent, and the generic principles defined herein may be applied to other implementations without departing from the scope of the application. Thus, the present application is not intended to be limited to the implementations shown herein but is to be accorded the widest scope consistent with the principles and novel features as claimed.

## Claims

1. An apparatus for determining a relative position as between a wireless power transmitter and a wireless power receiver, the apparatus comprising:
a ferrite structure (402, 404); and
a plurality of detection loops (414, 416, 418a, 418b) formed from metallic traces on a flexible printed circuit, each of the detection loops wrapped on and around respective portions of the ferrite structure and about respective axes normal to a winding plane of each detection loop, wherein each detection loop is configured to sense an amount of magnetic flux flowing in a direction normal to the winding plane of the detection loop.

2. The apparatus of claim 1, wherein each of the plurality of detection loops comprises a solenoid detection loop.

3. The apparatus of claim 1, wherein the ferrite structure comprises a first ferrite block and a second ferrite block disposed adjacent to the first ferrite block.

4. The apparatus of claim 3, further comprising:
a first wireless power transfer coil wrapped on or around the first ferrite block; and
a second wireless power transfer coil wrapped on or around the second ferrite block.

5. The apparatus of claim 1, wherein the ferrite structure comprises a plurality of ferrite tiles disposed in a holder.

6. The apparatus of claim 1, wherein one of the plurality of winding loops is wound about a first axis and another of the plurality of winding loops is wound about a second axis perpendicular to the first axis.

7. The apparatus of claim 1, wherein one of the plurality of detection loops is disposed along a perimeter of a top surface of the ferrite structure.

8. The apparatus of claim 1, wherein one of the plurality of detection loops is disposed along side edges of the ferrite structure.

9. A method of determining a relative position as between a wireless power transmitter and a wireless power receiver, comprising:
for each detection loop of a plurality of detection loops (414, 416, 418a, 418b) formed from metallic traces on a flexible printed circuit, each of the detection loops wrapped on or around respective portions of a ferrite structure (402, 404) and about respective axes normal to a winding plane of each detection loop, sensing an amount of magnetic flux flowing in a direction normal to the winding plane of the detection loop, and
determining the relative position as between the wireless power transmitter and the wireless power receiver based at least in part on the amount of magnetic flux sensed by each of the plurality of detection loops.

10. The method of claim 9, wherein one of the plurality of detection loops is disposed along a perimeter of a top surface of the ferrite structure.

11. The method of claim 9, wherein one of the plurality of detection loops is disposed along side edges of the ferrite structure.

12. A method of fabricating an apparatus for determining a relative position as between a wireless power transmitter and a wireless power receiver, the method comprising:
providing a ferrite structure (402, 404),
forming a plurality of metallic traces on a flexible printed circuit configurable to be wrapped on the ferrite structure to form a plurality of detection loops (414, 416, 418a, 418b), and
wrapping the flexible printed circuit around the ferrite structure, such that each of the detection loops is wrapped around respective portions of the ferrite structure and about respective axes normal to a winding plane of each detection loop, the detection loop sensing an amount of magnetic flux flowing in a direction normal to the winding plane of the detection loop.

## Patentansprüche

1. Vorrichtung zum Bestimmen einer relativen Position zwischen einem drahtlosen Energiesender und einem drahtlosen Energieempfänger, wobei die Vorrichtung Folgendes aufweist:
eine Ferritstruktur (402, 404); und
eine Vielzahl von Detektionsschleifen (414, 416, 418a, 418b), die aus metallischen Bahnen auf einer flexiblen, gedruckten Schaltung gebildet sind, wobei jede der Detektionsschleifen auf und um jeweilige Abschnitte der Ferritstruktur und um jeweilige Achsen senkrecht zur Wickelebene jeder Detektionsschleife gewickelt ist, wobei jede Detektionsschleife konfiguriert ist zum Abfühlen einer Menge eines Magnetflusses, der in einer Richtung senkrecht zur Wickelebene der Detektionsschleife fließt.

2. Vorrichtung nach Anspruch 1, wobei jede der Vielzahl von Detektionsschleifen eine Magnetspulen-Detektionsschleife aufweist.

3. Vorrichtung nach Anspruch 1, wobei die Ferritstruktur einen ersten Ferritblock und einen zweiten Ferritblock, benachbart zum ersten Ferritblock angeordnet ist, aufweist.

4. Vorrichtung nach Anspruch 3, ferner aufweisend:
eine erste drahtlose Energieübertragungsspule, die auf oder um den ersten Ferritblock gewickelt ist; und
eine zweite drahtlose Energieübertragungsspule, die auf oder um den zweiten Ferritblock gewickelt ist.

5. Vorrichtung nach Anspruch 1, wobei die Ferritstruktur eine Vielzahl von Ferritkacheln oder -platten aufweist, die in einem Halter angeordnet sind.

6. Vorrichtung nach Anspruch 1, wobei eine der Vielzahl von Wicklungsschleifen um eine erste Achse und eine weitere der Vielzahl von Wicklungsschleifen um eine zweite Achse senkrecht zur ersten Achse gewickelt ist.

7. Vorrichtung nach Anspruch 1, wobei eine der Vielzahl von Detektionsschleifen entlang eines Perimeters einer Oberseite der Ferritstruktur angeordnet ist.

8. Vorrichtung nach Anspruch 1, wobei eine der Vielzahl von Detektionsschleifen entlang von Seitenkanten der Ferritstruktur angeordnet ist.

9. Verfahren zum Bestimmen einer relativen Position zwischen einem drahtlosen Energiesender und einem drahtlosen Energieempfänger, aufweisend:
für jede Detektionsschleife einer Vielzahl von Detektionsschleifen (414, 416, 418a, 418b), die aus metallischen Bahnen auf einer flexiblen, gedruckten Schaltung gebildet sind, wobei jede der Detektionsschleifen auf oder um jeweilige Abschnitte einer Ferritstruktur (402, 404) und um jeweilige Achsen senkrecht zu einer Wickelebene jeder Detektionsschleife gewickelt ist, Abfühlen einer Menge eines Magnetflusses, der in einer Richtung senkrecht zur Wickelebene der Detektionsschleife fließt, und
Bestimmen der relativen Position zwischen dem drahtlosen Energiesender und dem drahtlosen Energieempfänger basierend wenigstens teilweise auf der Menge des von jeder der Vielzahl von Detektionsschleifen detektierten Magnetflusses.

10. Verfahren nach Anspruch 9, wobei eine der Vielzahl von Detektionsschleifen entlang eines Perimeters einer Oberseite der Ferritstruktur angeordnet ist.

11. Verfahren nach Anspruch 9, wobei eine der Vielzahl von Detektionsschleifen entlang der Seitenkanten der Ferritstruktur angeordnet ist.

12. Verfahren zum Herstellen einer Vorrichtung zum Bestimmen einer relativen Position zwischen einem drahtlosen Energiesender und einem drahtlosen Energieempfänger, wobei das Verfahren Folgendes aufweist:
Bereitstellen einer Ferritstruktur (402, 404),
Ausbilden einer Vielzahl von metallischen Bahnen auf einer flexiblen, gedruckten Schaltung, die auf die Ferritstruktur gewickelt werden soll, um eine Vielzahl von Detektionsschleifen (414, 416, 418a, 418b) zu bilden, und
Wickeln der flexiblen, gedruckten Schaltung um die Ferritstruktur, so dass jede der Detektionsschleifen um jeweilige Abschnitte der Ferritstruktur und um jeweilige Achsen senkrecht zu einer Wickelebene jeder Detektionsschleife gewickelt ist, wobei die Detektionsschleife eine Menge eines Magnetflusses abfühlt, der in einer Richtung senkrecht zur Wickelebene der Detektionsschleife fließt.

## Revendications

1. Appareil de détermination d'une position relative entre un émetteur d'énergie sans fil et un récepteur d'énergie sans fil, l'appareil comprenant :
une structure de ferrite (402, 404) ; et
une pluralité de boucles de détection (414, 416, 418a, 418b) formées à partir de traces métalliques sur un circuit imprimé flexible, chacune des boucles de détection étant enroulée sur ou autour de parties respectives de la structure de ferrite et autour d'axes respectifs normaux à un plan d'enroulement de chaque boucle de détection, dans lequel chaque boucle de détection est configurée pour capter une quantité de flux magnétique passant dans une direction normale au plan d'enroulement de la boucle de détection.

2. Appareil selon la revendication 1, dans lequel chaque boucle de la pluralité de boucles de détection comprend une boucle de détection à solénoïde.

3. Appareil selon la revendication 1, dans lequel la structure de ferrite comprend un premier bloc de ferrite et un deuxième bloc de ferrite disposé de façon adjacente au premier bloc de ferrite.

4. Appareil selon la revendication 3, comprenant en outre :
une première bobine de transfert d'énergie sans fil enroulée sur ou autour du premier bloc de ferrite ; et
une deuxième bobine de transfert d'énergie sans fil enroulée sur ou autour du deuxième bloc de ferrite.

5. Appareil selon la revendication 1, dans lequel la structure de ferrite comprend une pluralité de tuiles de ferrite placées dans un support.

6. Appareil selon la revendication 1, dans lequel une boucle de la pluralité de boucles d'enroulement est enroulée autour d'un premier axe et une autre boucle de la pluralité de boucles d'enroulement est enroulée autour d'un deuxième axe perpendiculaire au premier axe.

7. Appareil selon la revendication 1, dans lequel une boucle de la pluralité de boucles de détection est placée le long d'un périmètre d'une surface supérieure de la structure de ferrite.

8. Appareil selon la revendication 1, dans lequel une boucle de la pluralité de boucles de détection est disposée le long de bords latéraux de la structure de ferrite.

9. Procédé de détermination d'une position relative entre un émetteur d'énergie sans fil et un récepteur d'énergie sans fil, comprenant les étapes suivantes :
pour chaque boucle de détection d'une pluralité de boucles de détection (414, 416, 418a, 418b) formées à partir de traces métalliques sur un circuit imprimé flexible, chacune des boucles de détection étant enroulée sur ou autour de parties respectives d'une structure de ferrite (402, 404) et autour d'axes respectifs normaux à un plan d'enroulement de chaque boucle de détection, la détection d'une quantité de flux magnétique passant dans une direction normale au plan d'enroulement de la boucle de détection, et
la détermination de la position relative entre l'émetteur d'énergie sans fil et le récepteur d'énergie sans fil sur la base au moins en partie de la quantité de flux magnétique détectée par chaque boucle de la pluralité de boucles de détection.

10. Procédé selon la revendication 9, dans lequel une boucle de la pluralité de boucles de détection est disposée le long d'un périmètre d'une surface supérieure de la structure de ferrite.

11. Procédé selon la revendication 9, dans lequel une boucle de la pluralité de boucles de détection est disposée le long de bords latéraux de la structure de ferrite.

12. Procédé de fabrication d'un appareil de détermination d'une position relative entre un émetteur d'énergie sans fil et un récepteur d'énergie sans fil, le procédé comprenant les étapes suivantes :
la fourniture d'une structure de ferrite (402, 404),
la formation d'une pluralité de traces métalliques sur un circuit imprimé flexible configurable pour être enroulé sur la structure de ferrite pour former une pluralité de boucles de détection (414, 416, 418a, 418b), et
l'enroulement du circuit imprimé flexible autour de la structure de ferrite, de sorte que chacune des boucles de détection est enroulée autour de parties respectives de la structure de ferrite et autour d'axes respectifs normaux à un plan d'enroulement de chaque boucle de détection, la boucle de détection captant une quantité de flux magnétique passant dans une direction normale au plan d'enroulement de la boucle de détection.
